# EUROPEAN PATENT APPLICATION

(11) **EP 2 320 364 A1**
(43) Date of publication of application: **11.05.2011**
(21) Application number: 08809245.7
(22) Date of filing: 22.08.2008
(51) Int. Cl.: G06Q 10/00, G06Q 50/00

(54) **TRAVEL EXPENSE ADJUSTMENT DEVICE AND TRAVEL EXPENSE ADJUSTMENT METHOD**

(71) Applicant: Navitime Japan Co., Ltd., Tokyo 107-0062 (JP)
(72) Inventor: ONISHI, Keisuke, Tokyo 101-0041 (JP); KIKUCHI, Shin, Tokyo 101-0041 (JP); MURAI, Kazuyoshi, Tokyo 101-0041 (JP); SAKAMOTO, Hiroshi, Tokyo 101-0041 (JP)
(74) Representative: HOFFMANN EITLE
(86) International application number: PCT/JP2008/065036
(87) International publication number: WO 2010/021059

(57) **Abstract**

According to the present invention, a route covered by travel expenses and satisfying a route search condition input by a member of a group who wishes an adjustment of travel expenses is created, and greenhouse gas emissions emitted at a time of using the created route are calculated. The greenhouse gas emissions are offset by subtracting the calculated greenhouse gas emissions from an amount of emission credits stored in a storage unit, and it is determined whether the greenhouse gas emissions have been offset. When it is determined that the greenhouse gas emissions have not been offset, a display unit is caused to display a travel-expense-application rejection notification indicating that an application for an adjustment of travel expenses applied by the member is rejected.

## Description

### TECHNICAL FIELD

The present invention relates to a travel expense adjusting apparatus and a travel expense adjusting method.

### BACKGROUND ART

Recently, a scheme referred to as carbon offset has been started as a measure for offsetting emissions of greenhouse gases such as CO₂ (carbon dioxide) with respect to global warming issue due to greenhouse gases. The basic of carbon offset is to purchase emission credits with respect to carbon dioxide emissions, and invest a fund corresponding to the emission credits to natural energy development and forestation or the like, to offset the carbon dioxide emissions.

Greenhouse gas emissions need to be ascertained first in order to execute carbon offset schemes.

For example, Patent Document 1 describes a method of measuring an amount of greenhouse gases generated due to business activities or the like. Specifically, according to the method described in Patent Document 1, greenhouse gas emissions are calculated based on energies (such as gas, electricity, petroleum, and coal) used by business offices or the like.

Patent Document 1: Japanese Patent Application Laid-open No. 2001-183186

### DISCLOSURE OF INVENTION

### PROBLEM TO BE SOLVED BY THE INVENTION

However, the locations of generating greenhouse gases generated due to business activities or the like are not limited in business offices. For example, greenhouse gases are also generated when such as employees of company or the like travel by using transportation facilities. Specifically, for example, it is considered that greenhouse gases are generated when employees of company commute to and from work, go out on businesses, and travel on company businesses. For example, in a case of large companies, greenhouse gas emissions are large because they have a large number of employees, and this fact should be taken into consideration. In this point, however, greenhouse gases generated at the time of travel of employees is not taken into consideration in conventional techniques (for example, Patent Document 1).

Furthermore, in conventional techniques, when a company or the like declares to offset their carbon footprint, for example, commuting, going out on businesses, and travel on company businesses or the like for employees of company are employees' activities outside an office. Therefore, it is difficult to verify how carbon footprint is being offset from outside.

The present invention has been achieved to solve the above problems, and an object of the present invention is to provide a travel expense adjusting apparatus and a travel expense adjusting method that can take into consideration emissions of greenhouse gases generated at the time of travel of employees and the like, of greenhouse gases generated due to company activities or the like, can offset their carbon footprint with respect to greenhouse gas emissions generated when employees and the like use transportation facilities, and can verify whether their carbon footprint is being offset with respect to greenhouse gas emissions generated at the time of travel of members of the company, such as employees, when companies or the like declare to offset their carbon footprint voluntarily or are going to offset their carbon footprint according to the laws and regulations or the like.

### MEANS FOR SOLVING PROBLEM

In order to attain this object, a travel expense adjusting apparatus and a travel expense adjusting method according to one aspect of the present invention are a travel expense adjusting apparatus including a control unit and a storage unit and connected communicably via a network to a first information processing terminal including an input unit and a display unit and a travel expense adjusting method executed by the travel expense adjusting apparatus. The first information processing terminal is held by a member of a group who wishes an adjustment of travel expenses. The storage unit includes a route-search-information storage unit that stores route search information including timetable data, road network data, and usage fee data of transportation facilities, an emission calculation-standard storage unit that stores a calculation standard of emissions of greenhouse gases per certain distance for each of the transportation facilities, and an emission-credit amount storage unit that stores an amount of emission credits of the greenhouse gases for the group. The control unit includes a route creating unit (a route creating step) that receives, from the first information processing terminal, travel-expense application information including a route search condition input by the member via the input unit of the first information processing terminal, and creates at least one route satisfying the received route search condition and covered by the travel expenses by using the route search information stored in the route-search-information storage unit, a travel-expense calculating unit (a travel-expense calculating step) that calculates the travel expenses caused at a time of using the route created by the route creating unit (at the route creating step) by using the route search information stored in the route-search-information storage unit, an emission calculating unit (an emission calculating step) that calculates the emissions emitted at a time of using at least one route created by the route creating unit (at the route creating step) for each corresponding route by using the calculation standard stored in the emission calculation-standard storage unit, an emission offsetting unit (an emission offsetting step) that offsets the emissions by subtracting the emissions calculated by the emission calculating unit (at the emission calculating step) from the amount of emission credits stored in the emission-credit amount storage unit, an emission-offset determining unit (an emission-offset determining step) that determines whether the emissions have been offset by the emission offsetting unit (at the emission offsetting step), and a travel-expense-application rejection-notification displaying unit (travel-expense-application rejection-notification displaying step) that transmits, when the emission-offset determining unit (at the emission-offset determining step) determines that the emissions have not been offset, a travel-expense-application rejection notification indicating that an application for an adjustment of the travel expenses applied by the member is rejected to the first information processing terminal, and causes the display unit of the first information processing terminal to display the travel-expense-application rejection notification.

The travel expense adjusting apparatus and the travel expense adjusting method according to another aspect of the present invention is characterized in that the travel expense adjusting apparatus is further communicably connected via a network to a second information processing terminal including an input unit and a display unit. The second information processing terminal is held by a settling personnel who approves an adjustment of the travel expenses applied by the member. The control unit further includes a route-search-result displaying unit (a route-search-result displaying step) that transmits, when the emission-offset determining unit (at the emission-offset determining step) determines that the emissions have been offset, a route search result including the route in which the emissions have been offset and the travel expenses calculated by the travel-expense calculating unit (at the travel-expense calculating step) corresponding to the route to the second information processing terminal, and causes the display unit of the second information processing terminal to display the route search result, and a travel-expense-application approval-notification displaying unit (a travel-expense-application approval-notification displaying step) that receives approval information indicating approval of an adjustment of the travel expenses with respect to the travel-expense application information, input by the settling personnel via the input unit of the second information processing terminal, transmits a travel-expense-application approval notification including the received approval information and the route search result to the first information processing terminal, and causes the display unit of the first information processing terminal to display the travel-expense-application approval notification.

The travel expense adjusting apparatus and the travel expense adjusting method according to still another aspect of the present invention is characterized in that the storage unit further includes a history-information storage unit that stores history information in which at least a part of the route search result, the travel-expense-application approval notification, and the travel-expense-application rejection notification is associated with each other for each of the members. The travel-expense-application rejection-notification displaying unit (at the travel-expense-application rejection-notification displaying step) stores the travel-expense-application rejection notification in the history-information storage unit for each of the members. The route-search-result displaying unit (at the route-search-result displaying step) stores at least a part of the route search result in the history-information storage unit for each of the members. The travel-expense-application approval-notification displaying unit (at the travel-expense-application approval-notification displaying step) stores at least a part of the travel-expense-application approval notification in the history-information storage unit for each of the members.

### EFFECT OF THE INVENTION

According to the present invention, emissions of greenhouse gases generated at the time of travel of members (for example, employees, teachers, and students) of groups (for example, companies, institutions, associations, unions, and schools), of greenhouse gases generated due to business activities or the like, which conventional techniques could not take into consideration, can be taken into consideration and their carbon footprint can be offset with respect to the greenhouse gases generated at the time of using the transportation facilities. Furthermore, according to the present invention, when companies and the like declare to offset their carbon footprint voluntarily or are going to offset their carbon footprint according to the laws and regulations or the like, it is possible to verify whether their carbon footprint is being offset with respect to greenhouse gas emissions generated at the time of travel of the members such as employees. Specifically, according to the present invention, for example, when a member such as an employee of a group such as a company applies for travel expenses, it is possible to determine whether greenhouse gas emissions generated at the time of using a route covered by the travel expenses have been offset (carbon offset), and when it is determined that greenhouse gas emissions have not been offset, it is possible to notify to the member that payment of the travel expenses is not permitted. Therefore, according to the present invention, carbon footprint can be offset and verified reliably with respect to greenhouse gases generated due to business activities or the like.

According to the present invention, when it is determined that greenhouse gas emissions have been offset, the route search result including the carbon-offset route and travel expenses caused at the time of using the route can be displayed with respect to a settling personnel of the group such as a company, who gives approval with respect to the travel expenses applied by the member such as an employee of the group. Therefore, the settling personnel on an observer side can approve the travel expenses only with respect to the carbon-offset route. According to the present invention, therefore, when companies and the like declare to offset their carbon footprint voluntarily or are going to offset their carbon footprint according to the laws and regulations or the like, it is possible to verify whether their carbon footprint is being offset with respect to greenhouse gas emissions generated at the time of travel of the members such as employees.

According to the present invention, the amount of CO₂ emitted due to travel of members such as employees can be ascertained according to the history information in a history-information file. Therefore, for example, groups such as companies can monitor CO₂ emissions according to their sales ratio or profit ratio, and can monitor CO₂ emissions on an individual basis of employees, to output data for controlling management, taking environmental issues into consideration.

In the present invention, attention is paid on a fact that an adjustment of travel expenses is performed when transportation facilities are used in business activities or the like, and when the carbon footprint has been offset, the adjustment of travel expenses is performed. Therefore, when the carbon footprint has not been offset, the adjustment of travel expenses can be suspended, and a company side can monitor an implementation state of the carbon offset scheme by members such as employees of groups such as companies.

### BRIEF DESCRIPTION OF DRAWINGS

FIG. 1 is a block diagram of an example of a logical configuration of a travel expense adjusting apparatus 100 according to the present invention.
FIG. 2 is a diagram of an example of basic processing performed by the travel expense adjusting apparatus 100 according to the present invention.
FIG. 3 is a flowchart of an example of a travel-expense calculating process.
FIG. 4 is a flowchart of an example of an emission calculating process.
FIG. 5 is a flowchart of an example of an emission-credit purchase-amount calculating process.
FIG. 6 is a flowchart of an example of an emission-credit-amount subtracting process.
FIG. 7 is a diagram of an example of the travel expense adjusting apparatus 100 according to other embodiment of the present invention configured by a plurality of server devices.
FIG. 8 is a diagram of another example of the travel expense adjusting apparatus 100 according to other embodiment of the present invention configured by the server devices.

### EXPLANATIONS OF LETTERS OR NUMERALS

100 travel expense adjusting apparatus
102 control unit
   102a route creating unit
   102b travel-expense calculating unit
   102c emission calculating unit
   102d emission offsetting unit
   102e emission-offset determining unit
   102f travel-expense-application rejection-notification displaying unit
   102g route-search-result displaying unit
   102h travel-expense-application approval-notification displaying unit
104 communication control interface unit
106 storage unit
   106a route-search-information file
   106b emission calculation-standard file
   106c emission-credit amount file
   106d history-information file
10-1 first information processing terminal
10-2 second information processing terminal
300 network

### BEST MODE(S) FOR CARRYING OUT THE INVENTION

The following describes an embodiment of a travel expense adjusting apparatus, and a travel expense adjusting method, and a program according to the present invention in detail with reference to the drawings below. The present invention is not limited to the embodiments.

### Outline of present invention

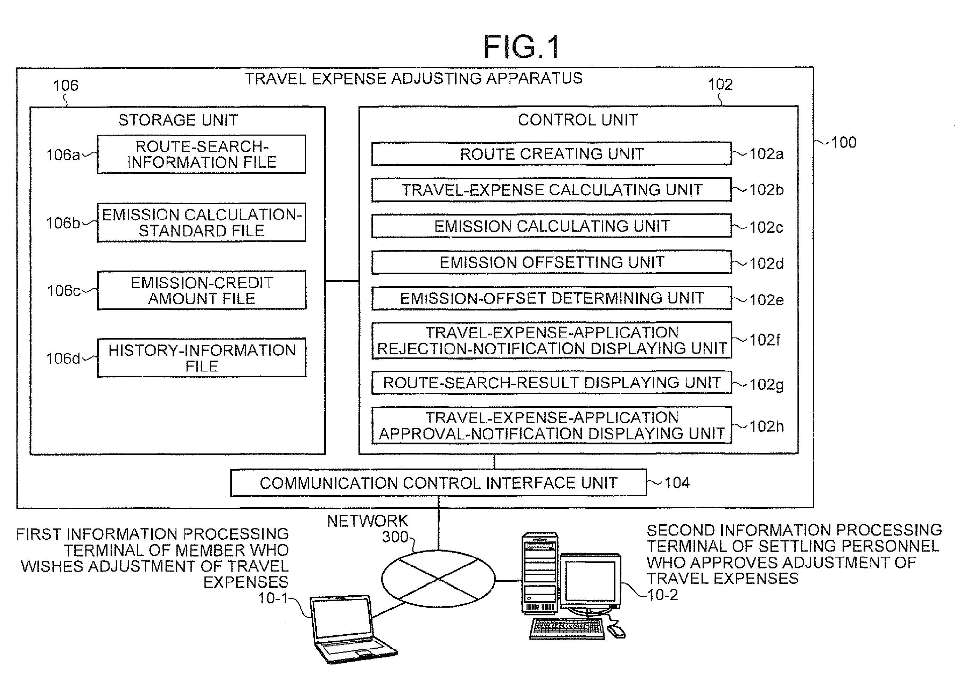

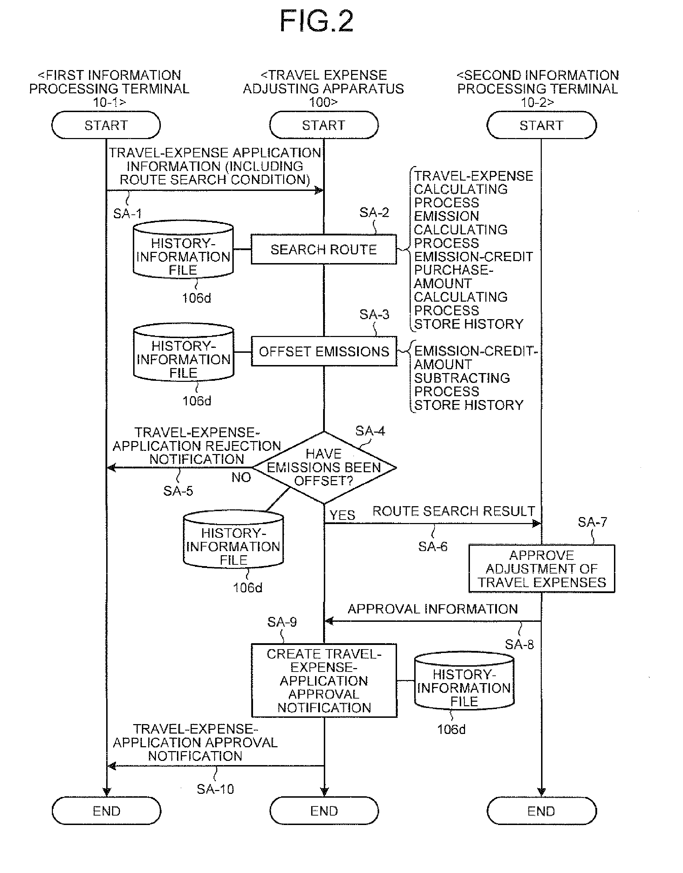

In an outline of the present invention, a configuration and basic processing of a travel expense adjusting apparatus according to the present invention are explained with reference to FIGS. 1 and 2, and then respective processes of the travel expense adjusting apparatus according to the present invention are explained in detail below. FIG. 1 is a block diagram of an example of a logical configuration of a travel expense adjusting apparatus 100 according to the present invention, which conceptually shows only parts of the configuration related to the present invention. FIG. 2 is a diagram of an example of the basic processing performed by the travel expense adjusting apparatus 100 according to the present invention.

### Configuration of travel expense adjusting apparatus 100

The configuration of the travel expense adjusting apparatus 100 is explained with reference to FIG. 1.

As shown in FIG. 1, schematically, the travel expense adjusting apparatus 100 is communicably connected to a first information processing terminal 10-1 including an input unit and a display unit, which is held by members of a group who wish an adjustment of travel expenses, and a second information processing terminal 10-2 including an input unit and a display unit, which is held by a settling personnel who approves an adjustment of travel expenses applied by the members, via a communication control interface unit 104 through a network 300. The travel expense adjusting apparatus 100 includes a storage unit 106 and a control unit 102. Respective units of the travel expense adjusting apparatus 100 are communicably connected to each other via an arbitrary communication path.

In FIG. 1, the first and second information processing terminals 10-1 and 10-2 have functions for accessing the travel expense adjusting apparatus 100 to perform route search and search for peripheral information, make an application and a request of travel expenses, and approve or reject the application and request of the travel expenses and the like. For example, the first and second information processing terminals 10-1 and 10-2 are information processors such as a desktop or laptop personal computer generally available in the market, or a portable terminal device such as a mobile phone, PHS, or PDA. The first and second information processing terminals 10-1 and 10-2 respectively include a display unit (for example, a display or monitor constituted of a liquid crystal or organic EL) that displays a route search result, a travel-expense-application approval notification, a travel-expense-application rejection notification, an offset result and the like received from the travel expense adjusting apparatus 100, and an input unit (for example, a key input unit, a touch panel, a keyboard, or a microphone) that inputs travel-expense application information including a route search condition to be transmitted to the travel expense adjusting apparatus 100 and inputs approval information for approving an application or a request of the travel expenses. The first and second information processing terminals 10-1 and 10-2 may include, for example, a position detecting unit (not shown) having a GPS function, and may transmit position information indicating a present location detected by the position detecting unit to the travel expense adjusting apparatus 100 so that navigation guide may be performed on a real-time basis by the travel expense adjusting apparatus 100.

In FIG. 1, the communication control interface unit 104 is an interface connected to a communication device (not shown) such as a router connected to a communication line, a phone line or the like, and has a function of performing communication control between the travel expense adjusting apparatus 100 and the network 300. That is, the communication control interface unit 104 has a function of communicating data with the first and second information processing terminals 10-1 and 10-2 and an external device (not shown) such as other server via the communication line. The network 300 has a function of interconnecting the travel expense adjusting apparatus 100 and the first and second information processing terminals 10-1 and 10-2 or the external device such as other server, and for example, may include the Internet, a telephone network (including portable terminal network and general telephone network), the Intranet or the like.

In FIG. 1, the storage unit 106 is a storage unit such as a fixed disk device or en external hard disk, and stores various databases and tables (such as a route-search-information file 106a to a history-information file 106d). For example, the storage unit 106 stores various programs, tables, files, databases, web pages and the like to be used for various processes.

Among the respective components of the storage unit 106, the route-search-information file 106a is a route-search-information storage unit that stores the route search information including timetable data, road network data, and usage fee data of transportation facilities to be used when the control unit 102 creates at least one route satisfying the route search condition (for example, a point of departure, a destination, a departure time, an arrival time, and transportation facilities to be used) received from the first information processing terminal 10-1. The timetable data to be stored in the route-search-information file 106a is numerical information and the like indicating a timetable of respective transportation facilities such as a train, an airplane, a bus, a streetcar, an aerial tramway, a monorail, a cable car, and a ship. The road network data to be stored in the route-search-information file 106a is latitude and longitude information, position information and the like on a map such as various roads to be used for creating a route at the time of traveling on foot or by a bicycle, a car, a motorbike or the like. The usage fee data to be stored in the route-search-information file 106a is numerical information and the like indicating a usage fee required at the time of using respective transportation facilities such as a train, an airplane, a bus, a streetcar, an aerial tramway, a monorail, a cable car, a ship or the like, and a fee for fuels consumed at the time of traveling by a car, a motorbike or the like, and may be used when the control unit 102 calculates the travel expenses. The timetable data, road network data and usage fee data are stored in the route-search-information file 106a beforehand, and the control unit 102 of the travel expense adjusting apparatus 100 may regularly download the latest data via the network 300 to update the route search information stored in the route-search-information file 106a.

Further, an emission calculation-standard file 106b is an emission calculation-standard storage unit that stores a calculation standard of greenhouse gas emissions per certain distance for each of transportation facilities to be used when the control unit 102 calculates the greenhouse gas emissions emitted at the time of using at least one of the created routes for each route. The emission calculation standard to be stored in the emission calculation-standard file 106b is a standard numerical value of the emission of greenhouse gases such as carbon dioxide per person calculated by being multiplied by a travel distance for each of the transportation facilities.

As an example, according to "Transport, Traffic and Environment, 2007" (issued by the Foundation for Promoting Personal Mobility and Ecological Transportation under supervision of Environment and Ocean Division, Policy Bureau, Ministry of Land, Infrastructure, Transport and Tourism), emissions of carbon dioxide of each of transportation facilities per person are, for example, 173 (g/km) in a case of a private car, 111 (g/km) in a case of an airplane, 51 (g/km) in a case of a bus, and 19 (g/km) in a case of a train. It is assumed that there are no carbon dioxide emissions in a case of walking. It is also assumed that even if there is a difference from a transportation facility actually used, when many users use various routes, the figure comprehensively approaches the one calculated by using the numerical value.

For example, in the case of a train, detailed classification may be performed according to route and vehicle type (such as a local train or a bullet train), and the calculation standard amy be corrected and calculated by using an optimum numerical value according to the classification. Further, for example, in a depopulated route, CO₂ emissions per passenger may increase. Therefore, the calculation standard may be corrected and calculated by using a most appropriate numerical value with respect to the depopulated route.

The calculation standard is stored in the emission calculation-standard file 106b beforehand, and the control unit 102 of the travel expense adjusting apparatus 100 may regularly download the latest data via the network 300 to update the calculation standard stored in the emission calculation-standard file 106b.

An emission-credit amount file 106c is an emission-credit amount storage unit that stores an amount of emission credits corresponding to greenhouse gases of a group (for example, companies, institutions, associations, unions, or schools), which is used when the control unit 102 offsets the greenhouse gas emissions by subtracting emission credits corresponding to the greenhouse gas emissions emitted at the time of using a route covered by travel expenses applied by a member (for example, an employee, a teacher, or a student) of the group via the input unit from the amount of emission credits stored in the emission-credit amount file 106c. As described later, when the control unit 102 calculates a purchase amount of emission credits required for offsetting greenhouse gas emissions emitted at the time of using the route covered by travel expenses, the purchase amount of emission credits corresponding to the greenhouse gas emissions may be subtracted from the amount of emission credits stored in the emission-credit amount file 106c. The amount of emission credits to be stored in the emission-credit amount file 106c is numerical information indicating the amount of emission credits (for example, in a unit of "g" or "¥") already purchased or to be purchased (when emission credits are purchased after the greenhouse gas emissions of the group are summed up) by the group. Because a unit price of emission credits is different according to the source thereof or timing, the emission-credit amount file 106c may store an identification code of the emission credits, total greenhouse gas emissions, a unit price of the emission credits and the like. In the present embodiment, the information of identification code, unit price and the like of the emission credits may be used when the control unit 102 calculates the purchase amount of emission credits required for offsetting the calculated greenhouse gas emissions.

The history-information file 106d is a history-information storage unit that stores history information in which at least a part of a route search result (a route in which greenhouse gas emissions have been offset, travel expenses required at the time of using the route and the like), the travel-expense-application approval notification (approval information with respect to travel-expense application information, route search result and the like), the travel-expense-application rejection notification, and the offset result (offset greenhouse gas emissions, purchase amount of emission credits corresponding to the greenhouse gas emissions and the like) are associated with each other for each of members, by storing the route search result, the travel-expense-application approval notification, the travel-expense-application rejection notification, and the offset result to be transmitted to the first and second information processing terminals 10-1 and 10-2 for each of the members by the control unit 102. As an example, the history-information file 106d may store at least an ID of the first information processing terminal 10-1 of the member and an ID of the second information processing terminal 10-2 of the settling personnel in association with offset greenhouse gas emissions for each of emission credits acquired beforehand (including emission credits already purchased or to be purchased), and may store at least a route and the purchase amount of emission credits in association with each other for each of IDs. Accordingly, the travel expense adjusting apparatus 100 can ascertain an amount of greenhouse gases (CO₂ or the like) emitted due to travel of a member such as an employee, thereby enabling to monitor greenhouse gas emissions based on, for example, the sales ratio or profit ratio for each department. Further, the travel expense adjusting apparatus 100 can monitor greenhouse gas emissions in a unit of individual member such as an employee, and can output data for conducting businesses as a company, taking environmental issues into consideration.

The storage unit 106 may also include a charge information storage unit that stores charge information relating to such as a charge status of the purchase amount of emission credits for each of the groups. The charge information storage unit may be used when the control unit 102 charges the calculated purchase amount of emission credits to a group who wishes an adjustment of travel expenses or the like. As an example, the control unit 102 may transmit the charge information relating to the emission credits already purchased or to be purchased by the group (for example, numerical information indicating an amount corresponding to greenhouse gas emissions) stored in the charge information storage unit beforehand to mobile phone carriers (for example, communication service providers for mobile phones or manufacturers of mobile phones), to charge the group on behalf of the travel expense adjusting apparatus 100 so that settlement is made.

In FIG. 1, the control unit 102 includes an internal memory that stores a control program such as an operating system (OS), a program specifying various processing procedures, and necessary data. The control unit 102 performs information processing for executing various pieces of processing by using these programs. The control unit 102 functionally and conceptually includes a route creating unit 102a, a travel-expense calculating unit 102b, an emission calculating unit 102c, an emission offsetting unit 102d, an emission-offset determining unit 102e, a travel-expense-application rejection-notification displaying unit 102f, a route-search-result displaying unit 102g, and a travel-expense-application approval-notification displaying unit 102h.

Among these units, the route creating unit 102a is a route creating unit that receives travel-expense application information including the route search condition input from the member of the group via the input unit of the first information processing terminal 10-1 to create at least one route covered by travel expenses and satisfying the received route search condition by mainly using the timetable data and the road network data and the like of the route search information stored in the route-search-information file 106a.

The travel-expense calculating unit 102b is a travel-expense calculating unit that calculates the travel expenses required at the time of using the route created by the route creating unit 102a, by mainly using the usage fee data and the like of the route search information stored in the route-search-information file 106a.

The emission calculating unit 102c is an emission calculating unit that calculates greenhouse gas emissions emitted at the time of using the at least one route created by the route creating unit 102a for each of the routes, by using the calculation standard stored in the emission calculation-standard file 106b.

The emission offsetting unit 102d is an emission offsetting unit that offsets the greenhouse gas emissions by subtracting emission credits corresponding to the greenhouse gas emissions calculated by the emission calculating unit 102c from the amount of emission credits stored in the emission-credit amount file 106c.

The control unit 102 may also include an emission-credit purchase-amount calculating unit that calculates the purchase amount of emission credits required for offsetting the greenhouse gas emissions calculated by the emission calculating unit 102c based on an identification code, a unit price and the like of the emission credits stored in the emission-credit amount file 106c, and the emission offsetting unit 102d may offset the greenhouse gas emissions by subtracting the purchase amount of emission credits corresponding to the greenhouse gas emissions calculated by the emission-credit purchase-amount calculating unit from the amount of emission credits stored in the emission-credit amount file 106c.

For example, because a purchase amount of emission credits may be calculated for each emission credit certificate issued by an emission credit provider or the like, the emission-credit purchase-amount calculating unit may inquire the emission-credit amount file 106c (or an external emission-credit management server communicably connected thereto via the network 300 or the like) of the unit price of emission credits usable for offsetting greenhouse gas emissions to estimate the purchase amount of emission credits.

Specifically, as an example, when the unit price of emission credits usable for offsetting greenhouse gas emissions is "¥4200/ton", the emission-credit purchase-amount calculating unit may estimate that the emission credits required for offsetting greenhouse gas emissions of, for example, "182 grams" is "4200/100D00*182=0.7644 (¥).
It is assumed that less than 1 yen is rounded to 1 yen for convenience' sake of processing. Thus, the emission-credit purchase-amount calculating unit may calculate the purchase amount of emission credits required for offsetting the greenhouse gas emissions (for carbon offset) of "182 grams" as "¥1". When a train is used, because greenhouse gas emissions are low, it may be set that the greenhouse gas emissions can be offset by the purchase cost of 1 yen. The route-search-result displaying unit 102g described later may display the greenhouse gas emissions and the purchase amount of emission credits corresponding to the greenhouse gas emissions, so that the group can easily ascertain the cost for realizing the carbon offset scheme.

Subsequently, as another example, when travel between "Haneda to Nagasaki (one way)" is performed by using an airplane, the emission calculating unit 102c calculates the greenhouse gas emissions as "175, 779 grams", and the emission-credit purchase-amount calculating unit may calculate the purchase amount of emission credits required for offsetting the greenhouse gas emissions (carbon offset) as "¥739" based on the unit price described above.

The emission-offset determining unit 102e is an emission-offset determining unit that determines whether greenhouse gas emissions have been offset by the emission offsetting unit 102d.

The travel-expense-application rejection-notification displaying unit 102f is a travel-expense-application rejection-notification displaying unit that transits a travel-expense-application rejection notification indicating that an application for an adjustment of travel expenses applied by a member is rejected to the first information processing terminal 10-1, when the emission-offset determining unit 102e determines that greenhouse gas emissions have not been offset, so that the display unit of the first information processing terminal 10-1 displays the travel-expense-application rejection notification. The travel-expense-application rejection-notification displaying unit 102f may store the travel-expense-application rejection notification in the history-information file 106d for each of the members.

The route-search-result displaying unit 102g is a route-search-result displaying unit that transmits a route search result including the route created by the route creating unit 102a in which greenhouse gas emissions have been offset by the emission offsetting unit 102d and the travel expenses corresponding to the route calculated by the travei-expense calculating unit 102b to the second information processing terminal 10-2, when the emission-offset determining unit 102e determines that greenhouse gas emissions have been offset, so that the display unit of the second information processing terminal 10-2 displays the route search result. The route-search-result displaying unit 102g may store at least a part of the route search result in the history-information file 106d for each of the members.

The travel-expense-application approval-notification displaying unit 102h is a travel-expense-application approval-notification displaying unit that receives, from the second information processing terminal 10-2, approval information indicating that an adjustment of the travel expenses is approved with respect to the travel-expense application information transmitted from the first information processing terminal 10-1 together with the route search condition, which are input by the settling personnel via the input unit of the second information processing terminal 10-2, and transmits the travel-expense-application approval notification including the received approval information and the route search result created by the route-search-result displaying unit 102g to the first information processing terminal 10-1, so that the display unit of the first information processing terminal 10-1 displays the travel-expense-application approval notification. The travel-expense-application approval-notification displaying unit 102h may store at least a part of the travel-expense-application approval notification in the history-information file 106d for each of the members.

The control unit 102 may also include a charging unit that charges the purchase amount of emission credits calculated by the emission-credit purchase-amount calculating unit to the groups. As an example, the charging unit may transmit charge information relating to the emission credits already purchased or to be purchased by the groups (for example, numerical information indicating an amount corresponding to the emission credits), which is stored in the charge information storage unit beforehand, to mobile phone carriers (for example, communication service providers for mobile phones or manufacturers of mobile phones), to charge the group on behalf of the travel expense adjusting apparatus 100 so that settlement is made.

The explanation of the configuration of the travel expense adjusting apparatus 100 ends here.

### Basic processing of travel expense adjusting apparatus 100

Basic processing of the present invention is explained below with reference to FIG. 2.

In the present invention, the first and second information processing terminals 10-1 and 10-2 respectively have an ID capable of logging in the travel expense adjusting apparatus 100 (for example, including an information processing terminal identification ID such as a body identification number of a mobile phone, a PHS, or a PDA, or a user identification ID of a navigation system), and log in the travel expense adjusting apparatus 100 to transmit the travel-expense application information together with a route search condition, the approval information with respect to the travel-expense application information and the like, when route search is required.

As shown in FIG. 2, the route creating unit 102a receives the travel-expense application information including the route search condition input via the input unit of the first information processing terminal 10-1 by a member of a group who wishes an adjustment of travel expenses, from the first information processing terminal 10-1 (Step SA-1).

The group here is an organization including a plurality of members, and includes, for example, companies, institutions, associations, unions, and schools. The members are limbs belonging to the group, and include people such as employees, teachers, and students.

The travel-expense application information includes at least the route search condition described later and identification information such as an ID for specifying a member who wishes an adjustment of travel expenses. The travel-expense application information may include numerical information beforehand, indicating travel expenses calculated by a process described later performed by the travel expense adjusting apparatus 100 according to an operation of the member.

The route search condition includes at least a point of departure and a destination, and may include a condition relating to date, time, display sequence (in the order of necessary time, fares, number of transfers, CO₂ emissions or the like), walking speed (standard, slow, or quick), and a route to be used (an airplane, a bullet train, a limited express train, a route bus, or other paid routes).

The route creating unit 102a creates at least one route covered by travel expenses and satisfying the route search condition received from the first information processing terminal 10-1 by using the route search information stored in the route-search-information file 106a. The travel-expense calculating unit 102b calculates travel expenses required at the time of using the route created by the process performed by the route creating unit 102a by mainly using the usage fee data and the like of the route search information stored in the route-search-information file 106a. The emission calculating unit 102c calculates the greenhouse gas emissions emitted at the time of using the at least one route created by the process performed by the route creating unit 102a for each of the routes, by using the calculation standard stored in the emission calculation-standard file 106b. The emission-credit purchase-amount calculating unit may calculate the purchase amount of emission credits required for offsetting the greenhouse gas emissions calculated by the process performed by the emission calculating unit 102c (Step SA-2). The control unit 102 may store at least a part of the route covered by the travel expenses created by the process performed by the route creating unit 102a, the travel expenses calculated by the process performed by the travel-expense calculating unit 102b, the greenhouse gas emissions per route calculated by the process performed by the emission calculating unit 102c, and the purchase amount of emission credits calculated by the process performed by the emission-credit purchase-amount calculating unit in the history-information file 106d in association with each other, for each of the members. Details of respective processes performed at Step SA-2 (a travel-expense calculating process, an emission calculating process, and an emission-credit purchase-amount calculating process) will be described later.

The emission offsetting unit 102d subtracts the greenhouse gas emissions calculated by the process performed by the emission calculating unit 102c from the amount of emission credits stored in the emission-credit amount file 106c to offset the greenhouse gas emissions (Step SA-3). The emission offsetting unit 102d may subtract the greenhouse gas emissions corresponding to the purchase amount of emission credits calculated by the process performed by the emission-credit purchase-amount calculating unit from the amount of emission credits stored in the emission-credit amount file 106c to offset the greenhouse gas emissions. The control unit 102 may store greenhouse gas emissions offset by the process performed by the emission offsetting unit 102d in the history-information file 106d as history information in association with each member. Details of a process performed at Step SA-3 (an emission-credit-amount subtracting process) will be described later.

The emission-offset determining unit 102e determines whether greenhouse gas emissions have been offset by the process performed by the emission offsetting unit 102d (Step SA-4).

When it is determined that the greenhouse gas emissions have not been offset by the process performed by the emission-offset determining unit 102e (NO at Step SA-4), the travel-expense-application rejection-notification displaying unit 102f transmits a travel-expense-application rejection notification indicating that an application for an adjustment of travel expenses (travel-expense application information) applied by a member who wishes an adjustment of travel expenses is rejected to the first information processing terminal 10-1 so that the display unit of the first information processing terminal 10-1 displays the travel-expense-application rejection notification (Step SA-5). The travel-expense-application rejection-notification displaying unit 102f may store the travel-expense-application rejection notification in the history-information file 106d as history information for each of the members. Thereafter, the process of the travel expense adjusting apparatus 100 is finished. The member holding the first information processing terminal 10-1, who has received the travel-expense-application rejection notification, prepares for offsetting his/her carbon footprint, for example, by newly purchasing emission credits, and then transmits the travel-expense application information to the travel expense adjusting apparatus 100 again at Step SA-1 to restart the process.

Returning to Step SA-4, when it is determined that greenhouse gas emissions have been offset by the process performed by the emission-offset determining unit 102e (YES at Step SA-4), the route-search-result displaying unit 102g may transmit the route search result including the route in which greenhouse gas emissions have been offset and the travel expenses calculated by the process performed by the travel-expense calculating unit 102b corresponding to the route to the second information processing terminal 10-2 so that the display unit of the second information processing terminal 10-2 displays the route search result (Step SA-6). The route-search-result displaying unit 102g may store at least a part of the route search result in the history-information file 106d as the history information for each of the members.

The travel-expense-application approval-notification displaying unit 102h may receive approval information indicating approval of an adjustment of travel expenses with respect to the travel-expense application information input by a settling personnel, who approves an application and a request of travel expenses, via the input unit of the second information processing terminal 10-2 (Step SA-7), from the second information processing terminal 10-2 (Step SA-8).

The approval information may include at least identification information such as an ID for specifying a settling personnel who approves an adjustment of the travel expenses with respect to the travel-expense application information including at least identification information such as an ID for specifying a member who wishes an adjustment (an application or a request) of the travel expenses.

The travel-expense-application approval-notification displaying unit 102h may create the travel-expense-application approval notification including the approval information received from the second information processing terminal 10-2, and the route search result including the route in which greenhouse gas emissions have been offset by the process performed by the emission offsetting unit 102d and travel expenses required at the time of using the route (Step SA-9).

The travel-expense-application approval-notification displaying unit 102h may transmit the created travel-expense-application approval notification to the first information processing terminal 10-1 so that the display unit of the first information processing terminal 10-1 displays the travel-expense-application approval notification (Step A-10). The travel-expense-application approval-notification displaying unit 102h may store at least a part of the travel-expense-application approval notification in the history-information file 106d for each of the members. The process of the travel expense adjusting apparatus 100 is then finished.

According to the travel expense adjusting apparatus 100, members can receive travel expenses approved by the travel expense adjusting apparatus 100, after reliably offsetting their carbon footprint (greenhouse gas emissions). Further, it is possible to verify whether the members have offset their carbon footprint by the travel expense adjusting apparatus 100, by referring to the history-information file 106d.

The explanation of the basic processing of the travel expense adjusting apparatus 100 ends here.

The explanation of the outline of the present invention ends here.

### Respective processes performed by travel expense adjusting apparatus 100

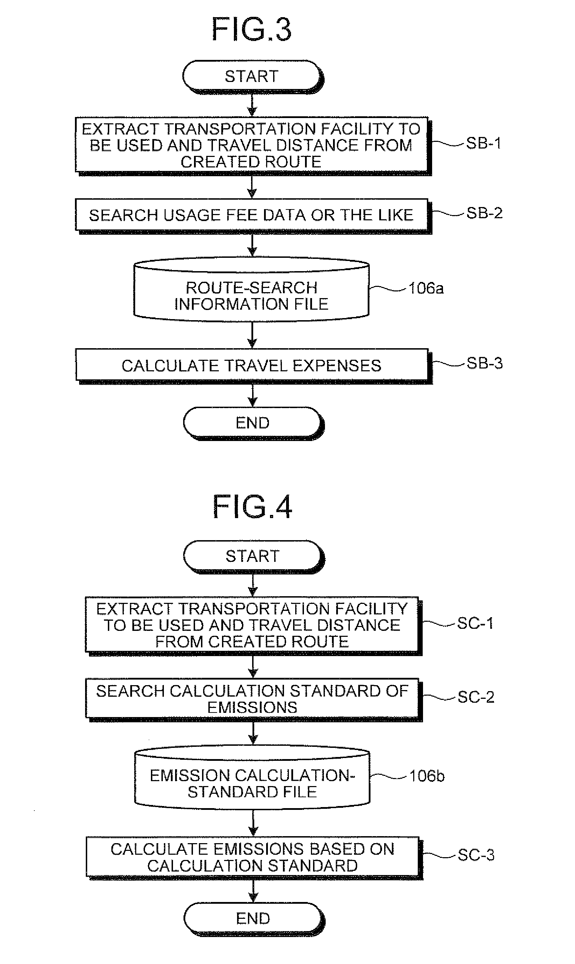

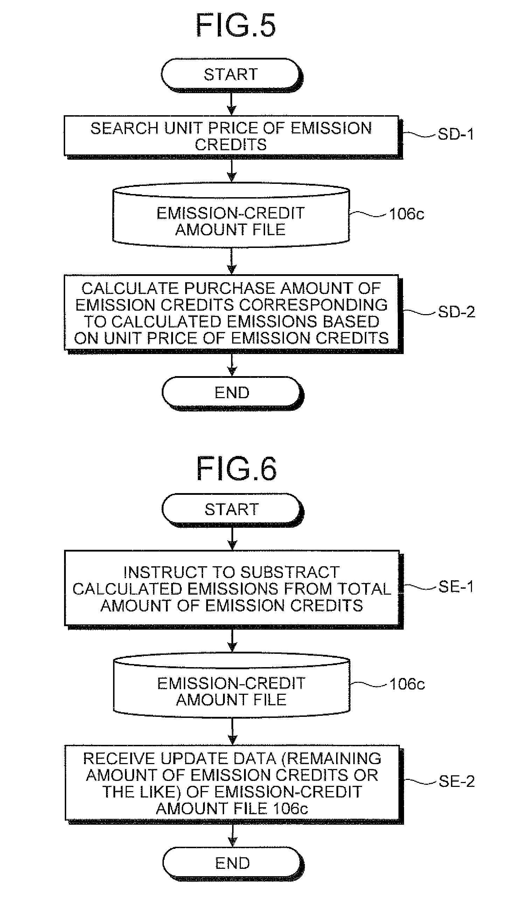

An example of respective processes (the travel-expense calculating process to the emission-credit-amount subtracting process) performed by the travel expense adjusting apparatus 100 in the present embodiment is explained in detail with reference to FIGS. 3 to 6. FIG. 3 is a flowchart of an example of the travel-expense calculating process. FIG. 4 is a flowchart of an example of the emission calculating process. FIG. 5 is a flowchart of an example of the emission-credit purchase-amount calculating process. FIG. 6 is a flowchart of an example of the emission-credit-amount subtracting process.

### Travel-expense calculating process

An example of the travel-expense calculating process performed at Step SA-2 in FIG. 2 is explained below with reference to FIG. 3.

As shown in FIG. 3, the travel-expense calculating unit 102b extracts, from the at least one route created by the process performed by the route creating unit 102a, transportation facilities (for example, a private car, an airplane, a bus, or a train) to be used at the time of using the route and a travel distance (km) at the time of using the route (Step SB-1).

The travel-expense calculating unit 102b inquires the route-search-information file 106a about the usage fee data (for example, numerical information indicating a usage fee required at the time of using respective transportation facilities such as a train, an airplane, a bus, a streetcar, an aerial tramway, a monorail, a cable car, a ship and the like, and a fee for fuels consumed at the time of traveling by a car, a motorbike or the like) stored in the route-search-information file 106a for calculating travel expenses based on the travel distance at the time of traveling by using the extracted transportation facility (Step SB-2).

The travel-expense calculating unit 102b calculates travel expenses by applying the transportation facility and the travel distance extracted at Step SB-1 to the searched usage fee data (Step SB-3).

### Emission calculating process

An example of the emission calculating process performed at Step SA-2 in FIG. 2 is explained below with reference to FIG. 4.

As shown in FIG. 4, the emission calculating unit 102c extracts, from the at least one route created by the process performed by the route creating unit 102a and covered by the travel expenses, a transportation facility (such as a private car, an airplane, a bus, or a train) to be used at the time of using the route and the travel distance (km) at the time of using the route (Step SC-1).

The emission calculating unit 102c inquires the emission calculation-standard file 106b for emission calculation standards different for each of the extracted transportation facility (for example, 173 (g/km) in a case of a private car, 111 (g/km) in a case of an airplane, 51 (g/km) in a case of a bus, and 19 (g/km) in a case of a train) (Step SC-2).

The emission calculating unit 102c applies the transportation facility (for example, a train) and the travel distance (for example, about 9.6 km) extracted at Step SC-1 to the searched calculation standard to calculate greenhouse gas emissions (for example, about 182 grams) (Step SC-3).

### Emission-credit purchase-amount calculating process

The emission-credit purchase-amount calculating process performed at Step SA-2 in FIG. 2 is explained with reference to FIG. 5.

As shown in FIG. 5, the emission-credit purchase-amount calculating unit may inquire the emission-credit amount file 106c about unit price of emission credits (for example, ¥4200/ton) (Step SD-1).

The emission-credit purchase-amount calculating unit calculates a purchase amount of emission credits (for example, 1 yen) corresponding to greenhouse gas emissions (for example, about 182 grams) calculated by the process performed by the emission calculating unit 102c, based on the inquired unit price of emission credits (Step SD-2).

### Emission-credit-amount subtracting process

An example of the emission-credit-amount subtracting process performed at Step SA-3 in FIG. 2 is explained below with reference to FIG. 6.

As shown in FIG. 6, the emission offsetting unit 102d instructs the emission-credit amount file 106c to subtract emission credits corresponding to the greenhouse gas emissions (for example, about 182 grams) calculated by the process performed by the emission calculating unit 102c from the total amount of emission credits stored in the emission-credit amount file 106c (for example, about 200,000 grams) (for example, 200,000 g - 182 g) (Step SE-1). The emission offsetting unit 102d may instruct the emission-credit amount file 106c to subtract the purchase amount of emission credits (for example, 1 yen) calculated by the emission-credit purchase-amount calculating process performed by the emission-credit purchase-amount calculating unit from the total amount of emission credits stored in the emission-credit amount file 106c (for example, 1000 yen) (for example, 1000 yen - 1 yen).

The emission offsetting unit 102d receives update data of the emission-credit amount file 106c indicating a remaining amount of emission credits after subtraction (for example, 200,000 g - 182 g = 199,818 g) (Step SE-2). When instructing the emission-credit amount file 106c to subtract the purchase amount of emission credits (for example, 1 yen) from the total amount of emission credits (for example, 1000 yen), the emission offsetting unit 102d may receive update data of the emission-credit amount file 106c indicating the remaining amount of emission credits after subtraction (for example, 1000 yen - 1 yen = 999 yen).

The explanations of the respective processes of the travel expense adjusting apparatus 100 end here.

### Other Embodiments

The embodiment of the present invention is explained above. However, the present invention may be implemented in various different embodiments other than the embodiment described above within a technical scope described in claims.

All the automatic processes explained in the present embodiment can be, entirely or partially, carried out manually. Similarly, all the manual processes explained in the present embodiment can be, entirely or partially, carried out automatically by a known method.

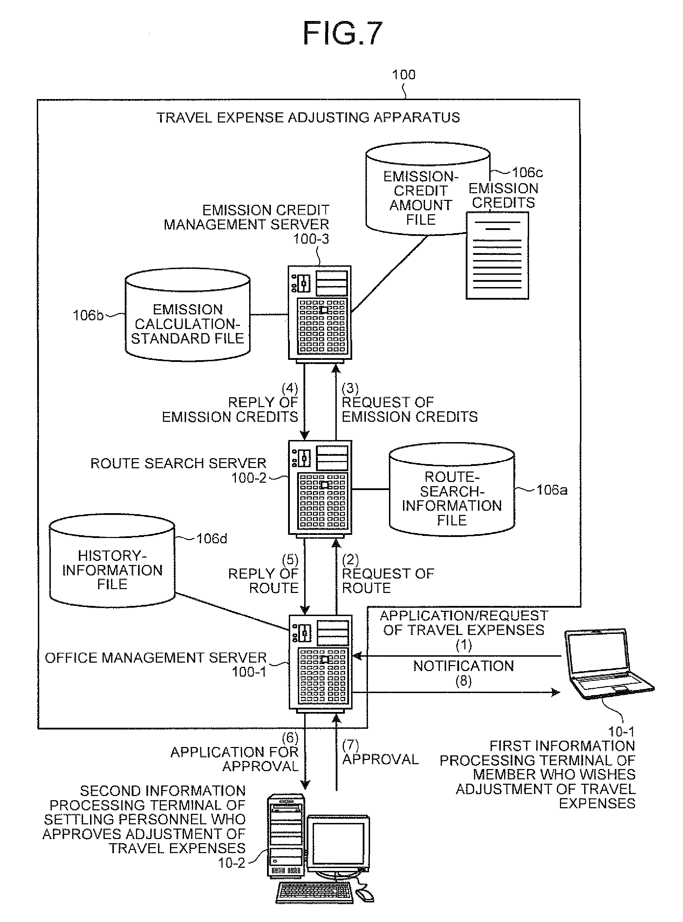

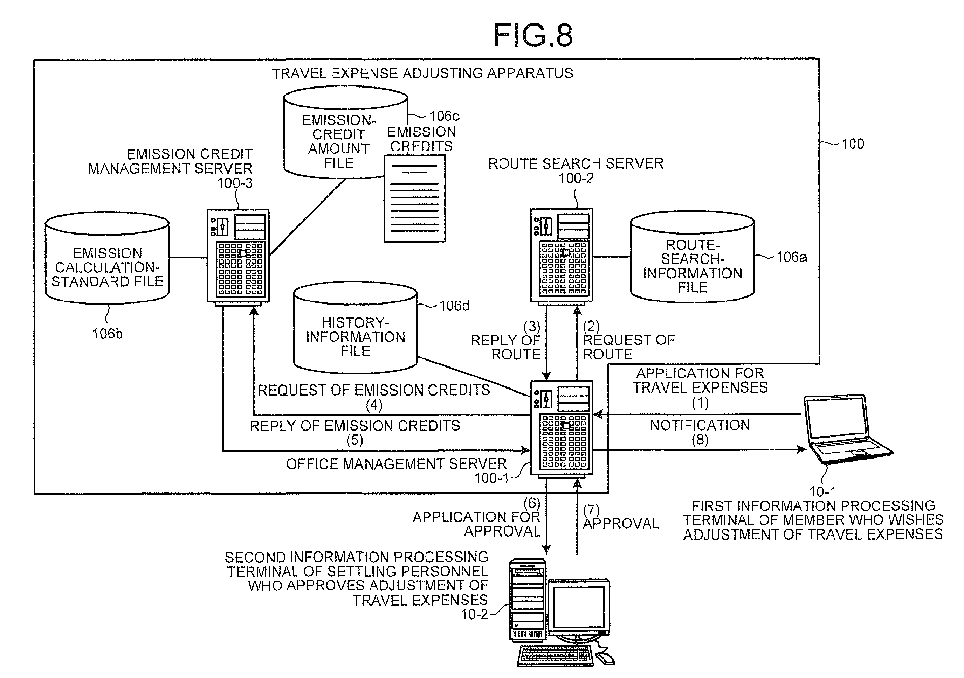

For example, in the present embodiment, the travel expense adjusting apparatus 100 is configured as a single server. However, it is also possible to configure the travel expense adjusting apparatus 100 with a plurality of servers functioning in tandem. FIG. 7 is a diagram of an example of the travel expense adjusting apparatus 100 according to other embodiment of the present invention configured by a plurality of server devices according to other embodiment of the present invention. FIG. 8 is a diagram of another example of the travel expense adjusting apparatus 100 according to other embodiment of the present invention configured by the server devices. In addition, there are some adjustment methods such as an advance approval or an after approval for the travel expense adjustment in the companies. However, the basic configurations of both the advance approval and the after approval are same. Therefore, the example of the advance approval will be explained in the present embodiment.

As an example, FIGS. 7 and 8 show the embodiments which are combination of an office management server 100-1 that performs the travel expense adjustment in the companies, a route search server 100-2 that performs the route searching, and an emission credit management server 100-3 of CO₂.

As shown in FIG. 7, the office management server 100-1 includes the history-information file 106d, and has functions corresponding to the emission offsetting unit 102f, the route-search-result displaying unit 102g, and the travel-expense-application approval-notification displaying unit 102h of the control unit 102 described above. The route search server 100-2 includes the route-search-information file 106a, and has functions corresponding to the route creating unit 102a and the travel-expense calculating unit 102b of the control unit 102 described above. The emission credit management server 100-3 includes the emission calculation-standard file 106b and the emission-credit amount file 106c, and has functions corresponding to the emission calculating unit 102c, the emission-credit purchase-amount calculating unit, the emission offsetting unit 102d, and the emission-offset determining unit 102e of the control unit 102 described above. Herein, the office management server 100-1, the route search server 100-2, and the emission credit management server 100-3 are communicably connected via a network 300 and perform data association. Hence, the plurality of servers 100-1 to 3 can be made to operate as the travel expense adjusting apparatus 100 according to the present invention.

Next, the flow of specific processing will be explained below. As shown in FIG. 7, (1) the application of the travel expenses: first, an employee applies the travel expenses together with the application of a business trip. (2) The request of the route: then, the office management server 100-1 requests for a route with respect to the route search server 100-2. Herein, the route search server 100-2 may search such as a route that emits low CO₂ emissions. Generally, the route that emits low CO₂ emission requires low travel expenses. (3) The request of emission credits: then, the route search server 100-2 inquires the CO₂ emissions corresponding to the route that searched by the route search server 100-2 with respect to the emission credit management server 100-3. (4) The Reply of the emission credits: then, the emission credit management server 100-3 replies that the route covered by the applied travel expenses can not be approved because there are no emission credits for offsetting the emissions in the emission credit management server 100-3, when such us the emission credits are being registered but the group or the like has not been purchased the emission credits, or has no prospect of purchasing the emission credits. Herein, even if the following flow ((5) or later) is proceed, the employee can not travel the business trip because the business trip of the employee is not approved and the employee can not receive the travel expenses. As a result, the company side can prohibit the use of the transportation facilities without the emission credits, and reliably perform and verify the carbon offsetting. (5) The reply of the route: then, the route search server 100-2 replies the route with respect to the office management server 100-1, when there are the emission credits in the emission credit management server 100-3. (6) The application for the approval: then, the office management server 100-1 applies for approval with respect to the settling personnel according to the fact that the route of this business trip has been offset. (7) The approval: when the settling personnel approves the application of approval from the office management server 100-1, (8) the office management server 100-1 notifies that the application of the travel expenses is approved with respect to the employee, and the employee receives the travel expenses. In addition, the order of the flow may be changed as follows. Before (6) the application for approval, the office management server 100-1 may notifies to confirm the route with respect to the employee, then applies the travel expenses with respect to the settling personnel. Further, the correction processing which cancels all processing may be configured when the employee has not been actually travel the business trip.

As an example, an embodiment that the plurality of servers (the office management server 100-1, the route search server 100-2, and the emission credit management server 100-3) are connected individually will be explained below with reference to FIG. 8. In this embodiment, various processing regarding the travel expenses adjustment is possible. The details explanation for functions and processing of each server is omitted because similar explanation is described with FIG. 7.

As shown in FIG. 8, at the time of functioning the loop ((1) → (2) → (3) → (8)), the route searching can be performed. This processing pattern may be used for the application of deciding schedule beforehand, estimating the travel expenses, or confirming the CO₂ emissions or the like. At the time of functioning the loop ((1) → (2) → (3) → (4) → (5) → (6) → (7) → (8)), the route searching is performed, the presence of the emission credits is confirmed, the settling personnel approves the application, the employee receives the notification, then the business trip can be realized. Alternatively, in the case of the application for commuter pass, the same loop ((1) to (8)) is also used. In this case, for example, the CO₂ emissions may be consumed as the 20 round trip per 1 month for commute route. At the time of functioning the loop ((1) → (4) → (5) → (6) → (7) → (8)), it is possible to adjust the case of supplying gas fee. The CO₂ emissions may be consumed according to the amount of gas, when the route is already known, the consumed amount is known, or supplied amount is uniformly determined.

As described above, even if either one of the methods described with reference to FIGS. 7 and 8 is used, the travel expense adjusting apparatus 100 is configured not to approve the travel expense adjustment, when there is no corresponding emission credits. Therefore, the CO₂ emission will suspend because the employee who had not received that travel expenses does not move. Thus, unable to adjust the travel expenses or travel the business trip becomes a deep problem for the employee. As a result, it is possible to make employee as a monitor for all movement required the travel expense. In addition, each server may be configured independently, or provided with integrated functions. The office management server 100-1 can ascertain the amount of CO₂ emitted due to travel of employees according to the history information in a history-information file 106d. Therefore, for example, the office management server 100-1 can monitor CO₂ emissions according to their sales ratio or profit ratio, and can monitor CO₂ emissions on an individual basis of employees, to output data for controlling management, taking environmental issues into consideration. The route search server 100-2 and the emission credit management server 100-3 may be set at outside of the company (for example, at a navigation operating company). Therefore, it is possible to monitor and authenticate an implementation of the carbon offset scheme by companies or the like from outside.

The process procedures, the control procedures, specific names, information including registration data for each process and various parameters such as search conditions, display example, and database construction, mentioned in the description and drawings can be changed as required unless otherwise specified.

The constituent elements of the travel expense adjusting apparatus 100 are merely conceptual and may not necessarily physically resemble the structures shown in the drawings.

For example, the process functions performed by each device of the travel expense adjusting apparatus 100, especially the each process function performed by the control unit 102, can be entirely or partially realized by CPU and a computer program executed by the CPU or by a hardware using wired logic. The computer program, recorded on a recording medium to be described later, can be mechanically read by the travel expense adjusting apparatus 100 as the situation demands. In other words, the storage unit 106 such as read-only memory (ROM) or hard disk drive (HDD) stores the computer program that can work in coordination with an operating system (OS) to issue commands to the CPU and cause the CPU to perform various processes. The computer program is first loaded to the random access memory (RAM), and forms the control unit 102 in collaboration with the CPU.

Alternatively, the computer program can be stored in any application program server connected to the travel expense adjusting apparatus 100 via the network 300, and can be fully or partially downloaded as the situation demands.

The computer program may be stored in a computer-readable recording medium, or may be structured as a program product. Here, the "recording medium" includes any "portable physical medium" such as a flexible disk, an optical disk, a ROM, an EPROM (Erasable Programmable Read Only Memory), an EEPROM (Electronically Erasable and Programmable Read Only Memory), a CD-ROM (Compact Disk Read Only Memory), an MO (Magneto-Optical disk), and a DVD (Digital Versatile Disk), or can be a "communication medium" such as a communication line or a carrier wave that holds the programs for a short period of time at the time of transmission via a network 300 such as a LAN, a WAN, or the Internet.

Computer program refers to a data processing method written in any computer language and written method, and can have software codes and binary codes in any format. The computer program can be a dispersed form in the form of a plurality of modules or libraries, or can perform various functions in collaboration with a different program such as the OS. Any known configuration in the each device according to the embodiment can be used for reading the recording medium. Similarly, any known process procedure for reading or installing the computer program can be used.

Various databases (the route-search information file 106a to the history-information file 106d) stored in the storage unit 106 is a storage unit such as a memory device such as a RAM or a ROM, a fixed disk device such as a HDD, a flexible disk, and an optical disk, and stores therein various programs, tables, databases, and web page files used for providing various processing or web sites.

The travel expense adjusting apparatus 100 may be structured as an information processing apparatus such as known personal computers or workstations, or may be structured by connecting any peripheral devices to the information processing apparatus. Furthermore, the travel expense adjusting apparatus 100 may be realized by mounting software (including programs, data, or the like) for causing the information processing apparatus to implement the method according of the invention.

The distribution and integration of the device are not limited to those illustrated in the figures. The device as a whole or in parts can be functionally or physically distributed or integrated in an arbitrary unit according to various attachments or how the device is to be used. That is, any embodiments described above can be combined when implemented, or the embodiments can selectively be implemented.

### INDUSTRIAL APPLICABILITY

As described above in detail, according to the present invention, it is possible to provide the travel expense adjusting apparatus and the travel expense adjusting method that can take into consideration emissions of greenhouse gases generated at the time of travel of employees and the like, of greenhouse gases generated due to company activities or the like, can offset their carbon footprint with respect to greenhouse gas emissions generated when employees and the like use transportation facilities, and can verify whether their carbon footprint is being offset with respect to greenhouse gas emissions generated at the time of travel of members of the company, such as employees, when companies or the like declare to offset their carbon footprint voluntarily or are going to offset their carbon footprint according to the laws and regulations or the like. The travel expense adjusting apparatus and the travel expense adjusting method according to the present invention can be provided as a server and software with respect to the company which performs the carbon offset, and can reduce the clerical burden of company side, when the present invention is provided as sets of the management for emissions of greenhouse gases.

Therefore, the travel expense adjusting apparatus and the travel expense adjusting method according to the present invention can deal with the greenhouse gases generated at the time of travel of employees in the company activities or the like, which has not been dealt with in the prior art, that is emissions of greenhouse gases generated at the time of travel of members such as employees of groups such as companies using the transportation facilities or the like. As a result, the travel expense adjusting apparatus and the travel expense adjusting method according to the present invention can calculate the emissions of greenhouse gases such as carbon dioxide when the employee and the like applies the travel expense, and the employee and the like can certainly participate in the carbon offset. Besides, by enabling a large number of carbon offsetting participants to purchase emission credits, an abundant flow of funds becomes available for the use of natural energy or the tree plantation programs thereby rejuvenating the related industries and contributing to the prevention of global warming. Therefore, the present invention is highly useful in information devices or in the field of information processing that supports carbon offsetting or route searching, and is highly useful in various fields such as natural energy development or the field of tree plantation.

Besides, since May 2007, the electrical power for all servers used in providing the navigation service has been switched by the present applicant(s) to the electrical power generated with natural energy sources by purchasing a green electricity certificate. Hence, the implementation of the present invention enables addressing the issue of environment conservation in a comprehensive manner.

## Claims

1. A travel expense adjusting apparatus comprising:
a control unit and a storage unit and connected communicably via a network to a first information processing terminal including: an input unit and a display unit, wherein
the first information processing terminal is held by a member of a group who wishes an adjustment of travel expenses, and
the storage unit includes:
a route-search-information storage unit that stores route search information including timetable data, road network data, and usage fee data of transportation facilities;
an emission calculation-standard storage unit that stores a calculation standard of emissions of greenhouse gases per certain distance for each of the transportation facilities; and
an emission-credit amount storage unit that stores an amount of emission credits of the greenhouse gases for the group, and
the control unit includes:
a route creating unit that receives, from the first information processing terminal, travel-expense application information including a route search condition input by the member via the input unit of the first information processing terminal, and creates at least one route satisfying the received route search condition and covered by the travel expenses by using the route search information stored in the route-search-information storage unit;
a travel-expense calculating unit that calculates the travel expenses caused at a time of using the route created by the route creating unit by using the route search information stored in the route-search-information storage unit;
an emission calculating unit that calculates the emissions emitted at a time of using at least one route created by the route creating unit for each corresponding route by using the calculation standard stored in the emission calculation-standard storage unit;
an emission offsetting unit that offsets the emissions by subtracting the emissions calculated by the emission calculating unit from the amount of emission credits stored in the emission-credit amount storage unit;
an emissions-offset determining unit that determines whether the emissions have been offset by the emission offsetting unit; and
a travel-expense-application rejection-notification displaying unit that transmits, when the emission-offset determining unit determines that the emissions have not been offset, a travel-expense-application rejection notification indicating that an application for an adjustment of the travel expenses applied by the member is rejected to the first information processing terminal, and causes the display unit of the first information processing terminal to display the travel-expense-application rejection notification.

2. The travel expense adjusting apparatus according to claim 1, wherein
the travel expense adjusting apparatus is further communicably connected via a network to a second information processing terminal including: an input unit and a display unit, wherein
the second information processing terminal is held by a settling personnel who approves an adjustment of the travel expenses applied by the member, and
the control unit further includes:
a route-search-result displaying unit that transmits, when the emission-offset determining unit determines that the emissions have been offset, a route search result including the route in which the emissions have been offset and the travel expenses calculated by the travel-expense calculating unit corresponding to the route to the second information processing terminal, and causes the display unit of the second information processing terminal to display the route search result; and
a travel-expense-application approval-notification displaying unit that receives approval information indicating approval of an adjustment of the travel expenses with respect to the travel-expense application information, input by the settling personnel via the input unit of the second information processing terminal, transmits a travel-expense-application approval notification including the received approval information and the route search result to the first information processing terminal, and causes the display unit of the first information processing terminal to display the travel-expense-application approval notification.

3. The travel expense adjusting apparatus according to claim 2, wherein
the storage unit further includes a history-information storage unit that stores history information in which at least a part of the route search result, the travel-expense-application approval notification, and the travel-expense-application rejection notification is associated with each other for each of the members,
the travel-expense-application rejection-notification displaying unit stores the travel-expense-application rejection notification in the history-information storage unit for each of the members,
the route-search-result displaying unit stores at least a part of the route search result in the history-information storage unit for each of the members, and
the travel-expense-application approval-notification displaying unit stores at least a part of the travel-expense-application approval notification in the history-information storage unit for each of the members.

4. A travel expense adjusting method executed by a travel expense adjusting apparatus including:
a control unit and a storage unit and connected communicably via a network to a first information processing terminal including: an input unit and a display unit, wherein
the first information processing terminal is held by a member of a group who wishes an adjustment of travel expenses, and
the storage unit includes:
a route-search-information storage unit that stores route search information including timetable data, road network data, and usage fee data of transportation facilities;
an emission calculation-standard storage unit that stores a calculation standard of emissions of greenhouse gases per certain distance for each of the transportation facilities; and
an emission-credit amount storage unit that stores an amount of emission credits of the greenhouse gases for the group, and
the method comprising:
a route creating step of receiving, from the first information processing terminal, travel-expense application information including a route search condition input by the member via the input unit of the first information processing terminal, and creating at least one route satisfying the received route search condition and covered by the travel expenses by using the route search information stored in the route-search-information storage unit;
a travel-expense calculating step of calculating the travel expenses caused at a time of using the route created at the route creating step by using the route search information stored in the route-search-information storage unit;
an emission calculating step of calculating the emissions emitted at a time of using at least one route created at the route creating step for each corresponding route by using the calculation standard stored in the emission calculation-standard storage unit;
an emission offsetting step of offsetting the emissions by subtracting the emissions calculated at the emission calculating step from the amount of emission credits stored in the emission-credit amount storage unit;
an emission-offset determining step of determining whether the emissions have been offset at the emission offsetting step; and
a travel-expense-application rejection-notification displaying step of transmitting, when it is determined that the emissions have not been offset at the emission-offset determining step, a travel-expense-application rejection notification indicating that an application for an adjustment of the travel expenses applied by the member is rejected to the first information processing terminal, and causing the display unit of the first information processing terminal to display the travel-expense-application rejection notification, wherein
the steps are executed by the control unit.

5. The travel expense adjusting method according to claim 4, wherein
the travel expense adjusting apparatus is further communicably connected via a network to a second information processing terminal including: an input unit and a display unit, wherein
the second information processing terminal is held by a settling personnel who approves an adjustment of the travel expenses applied by the member, and
the method further comprising:
a route-search-result displaying step of transmitting, when it is determined that the emissions have been offset at the emission-offset determining step, a route search result including the route in which the emissions have been offset and the travel expenses calculated at the travel-expense calculating step corresponding to the route to the second information processing terminal, and causing the display unit of the second information processing terminal to display the route search result; and
a travel-expense-application approval-notification displaying step of receiving approval information indicating approval of an adjustment of the travel expenses with respect to the travel-expense application information, input by the settling personnel via the input unit of the second information processing terminal, transmitting a travel-expense-application approval notification including the received approval information and the route search result to the first information processing terminal, and causing the display unit of the first information processing terminal to display the travel-expense-application approval notification.

6. The travel expense adjusting method according to claim 5, wherein
the storage unit further includes a history-information storage unit that stores history information in which at least a part of the route search result, the travel-expense-application approval notification, and the travel-expense-application rejection notification is associated with each other for each of the members,
at the travel-expense-application rejection-notification displaying step, the travel-expense-application rejection notification is stored in the history-information storage unit for each of the members,
at the route-search-result displaying step, at least a part of the route search result is stored in the history-information storage unit for each of the members, and
at the travel-expense-application approval-notification displaying step, at least a part of the travel-expense-application approval notification is stored in the history-information storage unit for each of the members.
